# EUROPÄISCHE PATENTSCHRIFT

(11) **EP 0 875 275 B1**
(45) Veröffentlichungstag und Bekanntmachung des Hinweises auf die Patenterteilung: **03.12.2003**
(21) Anmeldenummer: 98107530.2
(22) Anmeldetag: 24.04.1998
(51) Int. Cl.: B01D 46/28

(54) **Filtermedium zur Trockenabscheidung**
Filter media for dry separation
Moyen filtrant pour séparation à sec

(30) Priorität: 30.04.1997 DE 29707787 U
(43) Veröffentlichungstag der Anmeldung: 04.11.1998
(73) Patentinhaber: FIRMA PAUL RIPPERT, D-33442 Herzebrock-Clarholz (DE)
(72) Erfinder: Schöning, Thomas, 33442 Herzebrock-Clarholz (DE)
(74) Vertreter: Elbertzhagen, Otto, Dipl.-Ing.

(56) Entgegenhaltungen:
- CH-A- 257 710
- FR-A- 935 802
- US-A- 2 027 906
- SOVIET PATENTS ABSTRACTS Week 9320 7.Juli 1993 Derwent Publications Ltd., London, GB; AN 93-166072 XP002073216 & SU 1 738 307 A (BELGOROD CONSTR MATERIALS TECH. INST.) , 7.Juni 1992

## Beschreibung

Die Erfindung bezieht sich auf eine Filteranordnung mit einem einem Feinabscheider vorgeordneten Vorabscheider zur Trockenabscheidung von klebenden Partikeln, insbesondere Farbpartikeln, aus einem Gasstrom.

Grundsätzlich ist bekannt, für das Filtern eines Gasstroms Bürstenkörper mit daran vorstehenden Borsten als Filtermedium im Durchlaßbereich des betreffenden Abscheiders vorzusehen. Hierzu ist es weiter bekannt, die Bürstenkörper mit den daran vorstehenden Borsten als Bürstenwalzen auszubilden.

Aus der schweizerischen Patentschrift CH 257 710 A geht ein solcher Filter für gasförmige Medien hervor, bei dem die Filterkörper durch rotierende Walzenbürsten gebildet weden, deren Borsten ineinandergreifen. Während der Drehung der Bürstenwalzen können die Borsten durch gegen sie anliegende Abstreicher gereinigt werden. Vornehmlich wird ein solcher Filter für die Tropfenabscheidung in Klima- und Kühlanlagen eingesetzt, wo es darauf ankommt, an den Borsten der Bürstenwalzen die in der Luft schwebenden Wasserdampfteilchen zu kondensieren und daran anhaften zu lassen.

Aus der Offenlegungsschrift SU 1 738 307 A ist ebenfalls ein Filter bekannt, welcher rotierende Walzenbürsten aufweist. Dieser Filter wird für die Staubabscheidung eingesetzt, wobei die Entfernung des Staubs von den Borsten der Bürstenwalzen zum einen durch die auf die Borsten und die darauf abgeschiedenen Partikel einwirkende Zentrifugalkraft und zum anderen durch das Berühren der Borsten der Bürstenwalzen untereinander erfolgt.

In dem Dokument US 2,027,906 A ist ein Luftfilter beschrieben, bei dem rotierende Bürstenwalzen in zwei Reihen hintereinander vorgesehen sind, wobei die Walzen der hinteren Reihe in der Lücke der Walzen der vorderen Reihe angeordnet sind. Eine Reinigung der Borsten der Bürstenwalzen an Ort und Stelle ist hier nicht verwirklicht, vielmehr müssen zur Reinigung die Bürstenwalzen aus der Filtervorrichtung ausgebaut werden.

Das Dokument FR 935 802 A offenbart eine Filtereinrichtung, die in unterschiedlicher Anordnung nebeneinander Bürstenwalzen aufweist, bei denen es darum geht, im Zwickelbereich zwischen den Bürstenwalzen an der Abströmseite Leitelemente vorzusehen, die den Gasstrom durch die Borsten der Bürstenwalzen hindurchzwingen.

Bei den bekannten Filtereinrichtungen wird nicht zwischen einer Grobabscheidung und einer Feinabscheidung unterschieden. Es hat sich jedoch herausgestellt, daß Filter mit rotierenden Walzenbürsten für eine Feinabscheidung mit einem hohen Abscheidungsgrad nicht geeignet sind. Andererseits gibt es jedoch bestimmte Verunreinigungen in Gasströmen durch Partikel, die in einem Grobabscheider ausgesondert werden müssen, um den nachfolgenden Feinabscheider zu entlasten. Es geht hier vor allem um in einem Gasstrom mitgeführte klebende Partikel, die einen Feinabscheider besonders schnell verstopfen.

Hier setzt die Erfindung an, der die Erkenntnis zugrundeliegt, daß die Vorabscheidung derartiger klebender Partikel sich besonders gut mit einem Vorabscheider in einer Filteranordnung gemäß Anspruch 1 bewältigen läßt, dessen Filtermedium aus rotierenden Walzenbürsten besteht, deren Borsten eine für den Gaswiderstand ausreichende Steifigkeit sowie eine für die Abreinigung elastische Biegesteifigkeit haben, um sie unter Verbiegung an Abstreifern zwecks Abreinigung entlangführen zu können. Denn die klebenden Partikel bilden auf den Borsten der Bürstenwalzen jeweils eine Schicht, die beim Verbiegen der Borsten, sobald diese an den Abstreifern entlanggeführt werden, aufbricht, wonach die Bruchstücke von den Bürstenwalzen herabfallen und entsorgt werden können.

Entsprechend ist Gegenstand der Erfindung eine Filteranordnung mit einem einem Feinabscheider vorgeordneten Vorabscheider zur Trockenabscheidung von klebenden Partikeln gemäß der Kombination der Merkmale des Patentanspruchs 1. Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: in schematischer Draufsicht eine Filtervorrichtung, die aus rotierenden Bürstenwalzen besteht und
- Fig. 2: die Ansicht der Filtervorrichtung nach Figur 1.

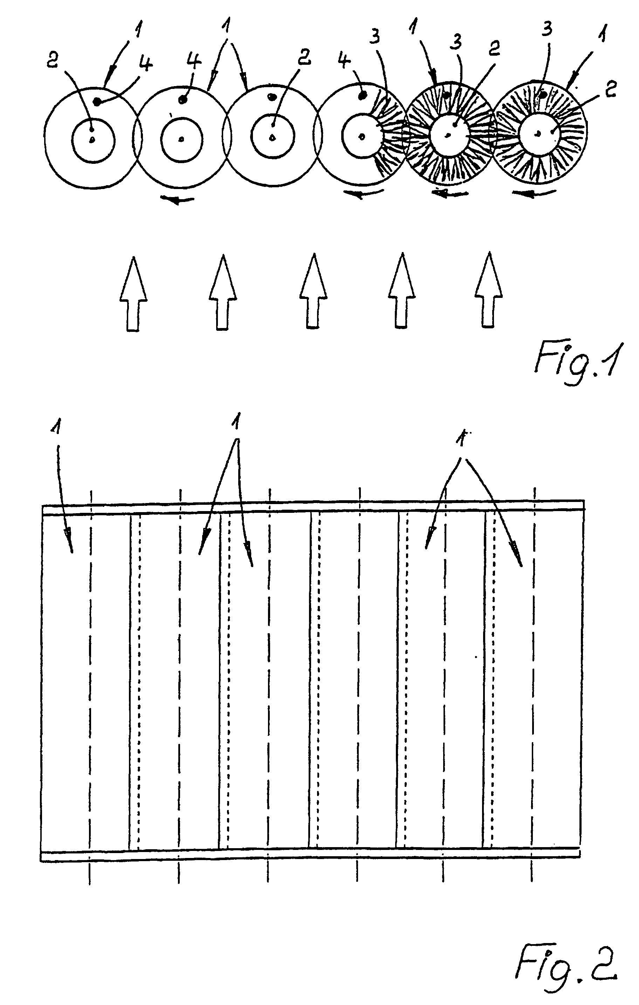

Im einzelnen zeigt die Zeichnung eine Mehrzahl von in einer Reihe nebeneinander angeordneten Bürstenwalzen 1, die je einen zentralen Bürstenkörper 2 aufweisen, an dem rundum in radialer Richtung vorstehend eine Vielzahl von Borsten 3 angeordnet ist. Jeweils zwei der benachbarten Bürstenwalzen 1 sind gleichläufig miteinander angetrieben und kämmen mit ihren Borsten, die folglich einander überlappend ineinandergreifen. Jeweils zwischen zwei der Bürstenkörper 2 befindet sich eine Durchlaßzone für einen Gasstrom, aus dem Partikel abzuscheiden sind. Die Richtung dieses Gasstroms ist in Figur 1 durch Pfeile angedeutet, die jeweils auf eine der genannten Durchlaßzonen ausgerichtet sind. Im Bereich dieser Durchlaßzone durchlaufen die Borsten 3 an den Bürstenkörpern 2 eine Position, in der sie quer oder doch zumindest im wesentlichen quer zu dem durchdringenden Gasstrom ausgerichtet sind, weswegen in der Durchlaßzone der Gasstrom an den Borsten 3 mehrfach umgelenkt wird, also einen Strömungswiderstand erfährt, wodurch insbesondere die im Gasstrom mitgeführten Partikel verzögert werden, damit sie sich an den Borsten 3 absetzen können.

Die Rotation der Bürstenwalzen 1 sorgt dafür, daß die Borsten 3 an den Bürstenkörpern 2 ständig ihre Position wechseln, was die Abscheidewirkung begünstigt. Zudem wird hierdurch auch eine mechanische Abreinigung der Borsten 3 erzielt, die aus einem elastisch verformbaren Material bestehen. Parallel zu den Bürstenkörpern sind deshalb als Abstreifer 4 dienende Stangen installiert, die in radialer Richtung einen Abstand von den Bürstenkörpern 2 haben, der kleiner als die Länge der Borsten 3 ist. Dadurch müssen sich die Borsten 3 infolge der Rotation der Bürstenwalzen ständig an den Abstreifern 4 unter elastischer Verbiegung vorbeidrängen, womit ein Abstreif- und Absprengvorgang bezüglich der an den Borsten 3 anhaftenden Partikel erzwungen wird. Damit die abgereinigten Partikel nicht an der Abluftseite des Filtermediums in den gereinigten Gasstrom gelangen, kann die durch Rotation der Bürstenwalzen 1 bewirkte Abreinigung diskontinuierlich vorgenommen werden, solange eine Beaufschlagung des Filtermediums durch einen zu reinigenden Gasstrom nicht erfolgt. Zum anderen können die Bürstenwalzen 1 auch kontinuierlich sehr langsam angetrieben werden, damit die aus dem zu reinigenden Gasstrom abgeschiedenden Partikel auf den Borsten 3 eine Beschichtung bilden, die dann beim Vorbeistreifen an den Abstreifern 4 in größeren Stücken abgesprengt wird, die nicht vom zu reinigenden Gasstrom über eine größere Distanz mitgerissen werden können.

## Patentansprüche

1. Filteranordnung mit einem einem Feinabscheider vorgeordneten Vorabscheider zur Trockenabscheidung von klebenden Partikeln, insbesondere Farbpartikeln, aus einem Gasstrom, wie einem Luftstrom, wobei der Vorabscheider in der Durchlaßzone rotierende, in zumindest einer Reihe nebeneinander oder übereinander angeordnete Bürstenwalzen (1) mit einer Vielzahl von an jeweils zentralen Bürstenkörpern (2) radial vorstehenden Borsten (3) aufweist und die Borsten (2) benachbarter Bürstenwalzen (1) ineinandergreifen und eine für einen Gaswiderstand ausreichende Steifigkeit sowie eine für die Abreinigung elastische Biegefähigkeit haben und wobei ferner feststehende Abstreifer (4) in Gestalt von mit den Bürstenkörpern (2) parallelen Stangen vorgesehen sind, die von den Bürstenkörpern in radialer Richtung einen Abstand kleiner als die Länge der Borsten (3) haben und an denen die Borsten (3) unter Verbiegung zwecks Abreinigung vorbeigedrängt werden.

2. Filteranordnung nach Anspruch 1,
**dadurch gekennzeichnet,**
**daß** die Abstreifer (4) in den Bereich der Borsten (3) der Bürstenwalzen (1) einfahrbar sind.

3. Filteranordnung nach Anspruch 1,
**dadurch gekennzeichnet,**
**daß** die Abstreifer (4) im Bereich der Borsten (3) der Bürstenwalzen (1) feststehend angeordnet sind.

4. Filteranordnung nach einem der Ansprüche 1 bis 3,
**dadurch gekennzeichnet,**
**daß** die jeweils einander benachbarten, mit ihren Borsten (3) miteinander kämmenden Bürstenwalzen gleichläufig angetrieben sind.

## Claims

1. Filter assembly with a preliminary separator mounted in front of a fine separator and used for dry separation of adhesive particles, more particularly paint particles, from a gas stream such as an air stream whereby the preliminary separator has brush rollers (1) mounted one above the other or side by side in at least one row and rotating in the passage zone and each with a number of bristles (3) protruding radially from central brush bodies (2) whereby the bristles (3) of adjoining brush rollers (1) engage in each other and have a rigidity which is sufficient for a gas resistance as well as an elastic bending property for cleaning and whereby fixed strippers (4) are also provided in the form of rods parallel with the brush bodies (2) and spaced from the brush bodies by a spacing in the radial direction which is less than the length of the bristles (3) and past which the bristles (3) are forced to bend for cleaning purposes.

2. Filter assembly according to claim 1,
**characterised in that**,
the strippers (4) can be moved into the region of the bristles (3) of the brush rollers (1).

3. Filter assembly according to claim 1,
**characterised in that**,
the strippers (4) are arranged fixed in the region of the bristles (3) of the brush rollers (1).

4. Filter assembly according to one of claims 1 to 3,
**characterised in that**,
the relevant adjoining brush rollers which intermesh through their bristles (3) are driven in the same direction.

## Revendications

1. Moyen filtrant avec un pré-séparateur, disposé en amont d'un séparateur fin, pour la séparation à sec de particules visqueuses, notamment de particules de matières colorantes, à partir d'un courant de gaz, comme un courant d'air, le pré-séparateur présentant, dans la zone de passage, des balais rotatifs (1) qui sont disposés, au moins sur une rangée, les uns à côté des autres ou les uns au-dessus des autres et sont pourvus d'un grand nombre de poils de brosserie (3), qui sont en saillie, dans le sens radial, sur des corps de balais (2) centraux, respectifs, les poils de brosserie (2) des balais rotatifs (1) s'engageant les uns dans les autres et possédant une raideur suffisante pour opposer résistance au gaz ainsi qu'une souplesse élastique pour le nettoyage, et des racloirs fixes (4) étant prévus, lesquels présentent la forme de barres parallèles aux corps de balais (2) et sont situés, dans le sens radial, à une distance des corps de balais qui est inférieure à la longueur des poils de brosserie (3) et devant lesquels lesdits poils de brosserie (3) passent en fléchissant, en vue du nettoyage.

2. Moyen filtrant selon la revendication 1,
**caractérisé en ce que**
les racloirs (4) peuvent être rentrés dans le secteur des poils de brosserie (3) des balais rotatifs (1).

3. Moyen filtrant selon la revendication 1,
**caractérisé en ce que**
les racloirs sont fixes dans le secteurs des poils de brosserie (3) des balais rotatifs (1).

4. Moyen filtrant selon l'une des revendications 1 à 3,
**caractérisé en ce que**
les balais rotatifs respectivement voisins, dont les poils de brosserie (3) s'engagent les uns dans les autres, sont entraînés synchroniquement.
